# EUROPEAN PATENT APPLICATION

(11) **EP 3 726 331 A1**
(43) Date of publication of application: **21.10.2020**
(21) Application number: 20174771.4
(22) Date of filing: 14.05.2020
(51) Int. Cl.: G05D 1/02

(54) **VEHICLE CONVOY CONTROL**

(30) Priority: 16.04.2019 GB 201905361
(71) Applicant: Rolls-Royce plc, London N1 9FX (GB)
(72) Inventor: Clarke, Andrew, Derby, Derbyshire DE24 8BJ (GB)
(74) Representative: Rolls-Royce plc

(57) **Abstract**

Disclosed herein is a vehicle controller 103 that is located on a vehicle, the vehicle controller 103 comprising: a client communications device for communicating, over a satellite link, with a server communications device in a vehicle control centre 101 that is remote from the vehicle controller 103; and a vehicle control device arranged to control the movement of the vehicle in response to data received by the client communications device over the satellite link, such that the movement of the vehicle in one or more convoys of vehicles is dependent on received data by the client communications device.

## Description

The present disclosure relates to the control of vehicles. The relative positions and movement of vehicles in one or more convoys is remotely controlled over a satellite communications link.

There is a general need to improve the control of the relative positioning and movement of vehicles.

In order to clearly present the context of the present disclosure, details of background technology are provided below.

US 6,354,235 B1 discloses techniques for providing a convoy of towed ocean going cargo vessels. An ocean going convoy of cargo ships is towed by a specially adapted tug which controls the convoy. The tug remotely controls the cargo ships to move in a single convoy of ships that is led by the tug.

A problem with the convoy disclosed in US 6,354,235 B1 is that the convoy has no awareness of other convoys that may be operating. A plurality of convoys may therefore be operating independently and in close proximity of each other. This does not allow the convoys to be operated efficiently and convoys operating independently of each other are potentially a hazard to other shipping.

Another problem with the techniques disclosed in US 6,354,235 B1 is that the relative position of the ships to each other within a convoy is inefficient because it is not determined with consideration of the effects of ships on each other, the weather and other factors.

The present disclosure provides a method for controlling the movement of ships in one or more convoys that provides a number of advantages over the techniques disclosed in US 6,354,235 B1.

According to a first aspect of the disclosure there is provided a vehicle controller that is located on a vehicle, the vehicle controller comprising: a client communications device for communicating, over a satellite link, with a server communications device in a vehicle control centre that is remote from the vehicle controller; and a vehicle control device arranged to control the movement of the vehicle in response to data received by the client communications device over the satellite link, such that the movement of the vehicle in one or more convoys of vehicles is dependent on received data by the client communications device.

In the first aspect, the vehicle may be one or more of a boat, a vessel, a ship, an aircraft, a drone or a missile.

In the first aspect, the vehicle may be an unmanned vehicle.

According to a second aspect of the disclosure there is provided a vehicle control centre for controlling a plurality of vehicles, the vehicle control centre comprising: a computing system for generating data for controlling the movement of each of a plurality of vehicles, wherein the vehicles are all remote from the control centre and, in use, the generated data controls the movement of the vehicles in one or more convoys of vehicles; and a server communications device for communicating, over a satellite link, with a plurality of client communications devices, wherein each client communications device is comprised by a vehicle controller located on one of the plurality of vehicles; wherein, in use, data for controlling the movement of the vehicles in one or more convoys of vehicles is communicated from the control centre to the vehicles.

In the second aspect, the control centre may be land based.

According to a third aspect of the disclosure there is provided a vehicle control system for controlling a plurality of vehicles, the vehicle control system comprising: a plurality of vehicle controllers according to the first aspect, wherein each vehicle controller is located on a different vehicle; and a vehicle control centre according to the second aspect, arranged to generate and communicate, over a satellite link, data for controlling the movement of the vehicles in one or more convoys of vehicles.

In the third aspect, the plurality of vehicles may be comprised by a plurality of separate convoys of vehicles; and the vehicle control centre is arranged to control the movement of at least one convoy in dependence on the location and/or movement of one or more other convoys.

In the third aspect, the vehicle control centre may be arranged to control the number of vehicles in each convoy by controlling one or more vehicles to join at least one convoy and/or controlling one or more vehicles to leave at least one convoy.

In the third aspect, the vehicles may be arranged in a plurality of convoys; and the vehicle control centre may be arranged to control the movement of one or more vehicles from one convoy to one or more other convoys.

In the third aspect, the vehicle control centre may be arranged to control the relative positions of the vehicles within each convoy given the wake generated by at least one of the vehicles in the convoy.

In the third aspect, the vehicle control centre may be arranged to control the relative positions of the vehicles within each convoy such that the vehicles are in a Vee formation or a Diamond formation.

In the third aspect, the vehicle control centre may be arranged to control the relative positions of the vehicles within each convoy in dependence on: a prediction of the wake of at least one of the vehicles in the convoy; and/or one or more images of the convoy, such as satellite images.

In the third aspect, the vehicle control centre may be arranged to control the movement of each vehicle in dependence on metrological and/or oceanic data.

In the third aspect, the vehicle control centre may be arranged to determine a route for each vehicle to the intended destination of each vehicle in dependence on the location and movement of one or more other vehicles and/or one or more convoys of vehicles.

In the third aspect, the communication between the vehicle control centre and each vehicle may comprise using TCP/IP and/or UDP.

In the third aspect, the vehicle control centre may be arranged to send the generated data for controlling each vehicle to each vehicle such that each vehicle is controlled substantially in real time.

In the third aspect, the data communicated over the satellite link may be encrypted.

In the third aspect, the vehicle is a ship and each ship may be arranged to send over the satellite link to the vehicle control centre data on one or more of the ship's: owner, gross and nett displacement, plimsoll line, length and beam, minimum speed, maximum speed, preferred speed, crew requirements, destination port, fuel type, current amount of fuel, the current location of the ship and restrictions on how the ship may be controlled and/or operated.

In the third aspect, the vehicle control centre may be arranged to determine suitability of a ship for being the lead ship of a convoy; and control the determined ship to be lead ship.

According to a fourth aspect of the disclosure, there is provided a method of controlling the movement of a plurality of vehicles in one or more convoys of vehicles, the method comprising: generating, by a vehicle control centre, data for controlling the movement of vehicles in one or more convoys of vehicles; transmitting the generated data over a satellite communications link; receiving the transmitted data by each of a plurality of vehicle controllers, wherein each of the vehicle controllers is located on a different vehicle; and controlling the movement of each of the vehicles in one or more convoys of vehicles in dependence on the received data by each of the vehicle controllers.

In the fourth aspect, the method may be performed in a vehicle control system according to the third aspect.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
Figure 1 shows a control system according to an embodiment of th disclosure;
Figure 2 shows the wake of a ship;
Figure 3 shows an arrangement of a plurality of ships; and
Figure 4 is a flowchart of a method according to an embodiment.

The present disclosure provides an improved method of controlling the movement of vehicles. In the main description of embodiments the vehicles are ships. However, embodiments also include vehicles other than ships, such as aircraft.

Embodiments of the disclosure provide a system architecture and protocol for the active control of marine convoys. All of the movement of the convoy, the number of ships in the convoy and the relative position of the ships in the convoy may be determined according to one or more of strategic, security and/or operational considerations. In particular, the arrangement of the ships within each convoy may be controlled to improve efficiency through appropriate positioning of the ships given the wakes that the ships generate.

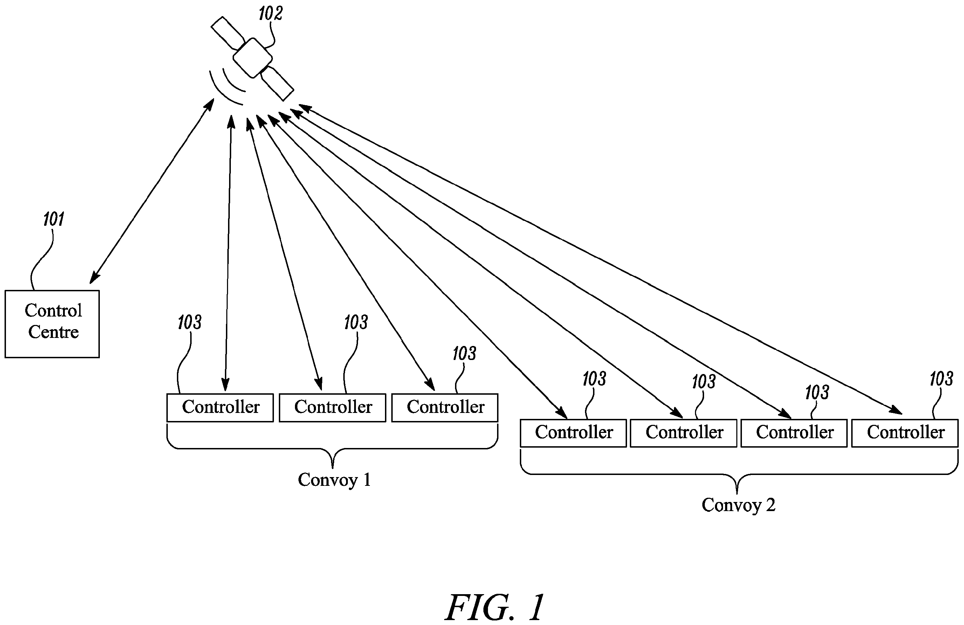

Figure 1 shows a control system according to an embodiment. The control system comprises a control centre 101 and a plurality of controllers 103. Each controller 103 is provided on a respective ship. There are first and second convoys, with each convoy comprising a plurality of ships. The control centre 101 communicates with each controller 103 via the satellite 102.

Each convoy is controlled from the land based control centre 101. The control centre 101 may be a fixed installation, i.e. a building. The control centre 101 communicates with each of the ships in each convoy via a secure satellite communications link. The communication may be via TCP and/or UDP.

The control centre 101 may use data such as GPS information, metrological and oceanic data, and other data, to control each ship in the convoy using a real time data link. Each ship in the convoy may provide data to the control centre, such as the location of the ship. Other data sources may provide data, such as metrological and oceanic data, to the control centre 101.

The control system according to embodiments comprises the above-described control centre 101 and a plurality of controllers 103. Each controller 103 is comprised by a ship that is remote from the control centre 101. The controllers 103 and control centre 101 are in a client-server arrangement, i.e. the control centre 101 acts as a server and each controller 103 is a client. The control centre 101 has a separate communications link with each controller 103 such that the control centre 101 can communicate directly with each controller 103. This is advantageous over communication techniques in which commands from a server are relayed between clients over a client-to-client communication link because, in a relay system, the failure of communication with one ship can cause a failure of communication with one or more further ships.

The control system provides an automated, active, land based command and control system for the navigation of potentially unmanned ships within, and between convoys. The communication with the ships may be with a new marine shipping command protocol that is arranged to actively organise ships into convoys when the ships enter open waters.

Convoys provide a number of strategic, operational, and security benefits. Embodiments allow convoys to be comprised of ships in a way that, to an extent, optimises the route of one or more of the ships.

Objects moving across the surface of water produce a wake pattern that is known as a Kelvin wake. This wake pattern comprises two wake lines, each of which form a leg of a 'V', with the two legs meeting at the vertex of the V being the location of the object.

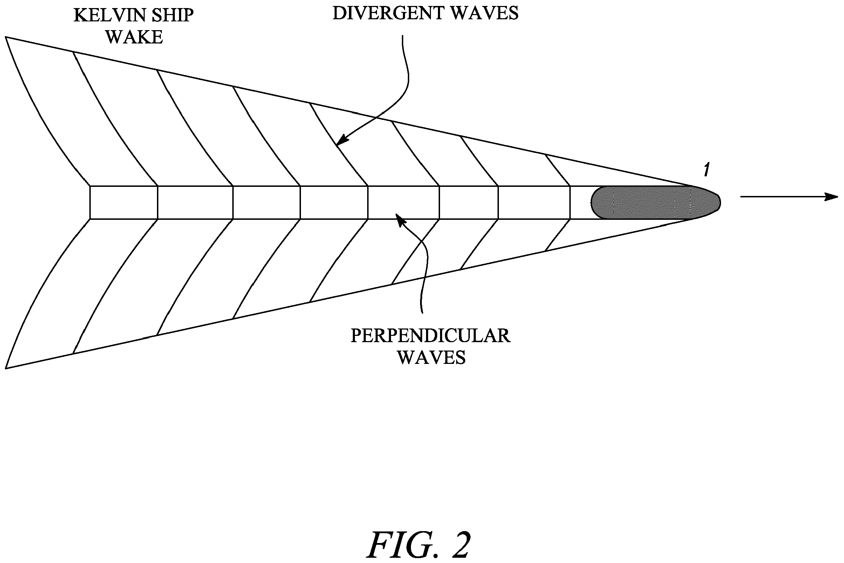

Figure 2 shows the Kelvin wake, referred to herein as just wake, generated by a ship. The wake comprises substantially perpendicular waves and also divergent waves. As a ship travels through water energy is lost due to the generation of the wake.

Embodiments include positioning ships within a convoy in such a way that improves hydrodynamic performance given the wake of at least one ship in the convoy. It is possible for one or more other ships to recover some of the energy lost by another ship that generates a wake by positioning themselves so that they ride the waves in the wake.

To an extent, it is possible for a ship to save energy by riding the wave of another ship (i.e. a lead ship) that is generating a wake regardless of the relative sizes of the ships. The lead ship may therefore be the larger ship, the smaller ship or both ships may be the same size.

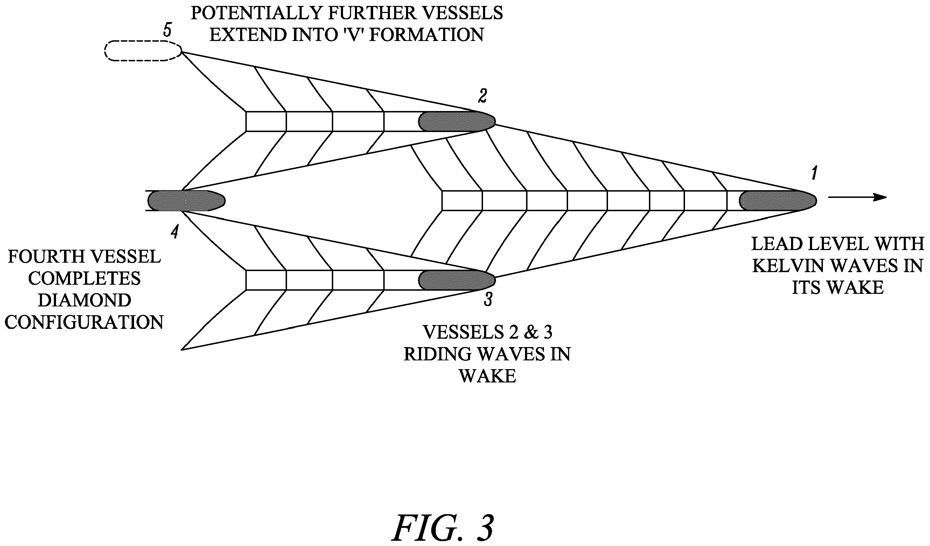

Figure 3 shows four ships travelling together in a convoy. The relative position of the ships allows the ships behind the lead ship to ride the wave generated by one or more of the ships ahead of it. Ship 1 is the lead ship. Ship 2 and ship 3 are riding the wave of ship 1. Ship 4 is riding the wave of ship 2 and ship 3. The ships have been arranged in a diamond formation and that advantageously allows the ship 4 to ride the wave of more than one ship. Another formation that allows waves to be ridden is the Vee formation. If ship 4 was not present in Figure 3, then the remaining ships would be in a Vee formation. A Vee formation could also be formed by adding fifth and sixth ships, on either side of ship 4 in Figure 3, that respectively ride the wave of ship 2 and ship 3.

The convoy could be expanded further by adding further ships in one or more further rows of ships behind the row that ship 4 is in.

The waves in the wake of the lead ship of a convoy move with the lead ship, the perpendicular waves having the same velocity as the lead ship itself, hence it's possible for the proximity of ships in the wake, relative to the lead ship, to be maintained whilst taking advantage of the wake. The total energy saving gained due to the hydrodynamic advantages that are obtained through the relative positioning of ships in a convoy increases with the distance that a convoy travels.

In a convoy according to an embodiment, the largest ship is the lead ship of the convoy with the remaining ships travelling behind in a marine peloton that may have a Vee, diamond or other formation. Ships in the middle of the convoy may travel through relatively flat water due to the supposition of dispersion waves from other ships cancelling each other out. Ships on the fringe of the wake may ride the dispersive waves. All ships may be powered at all times, with the power requirements of all the ships that are riding a wave reduced.

In an embodiment, the control centre 101 receives data on the size of each ship in a convoy and arranges for one of the ships, such as the largest ship, to be the lead ship. The control centre 101 then sends commands for controlling the movement of all of the ships so that the relative position of the ships within the convoy is appropriate for obtaining hydrodynamic advantages.

The control centre 101 may predict the wake generated by each of the individual ships and/or by the convoy as a whole. The predictions of the wakes may be augmented by real time, or substantially real time, satellite imagery of the convoy. This, and any other data, may be used to determine the appropriate position of the ships within the convoy. The control centre 101 may monitor and change the positions of the ships within the convoy as required to ensure that hydrodynamic advantages are obtained.

The control centre 101 may control the process of adding and removing one or more ships from a convoy. Whenever the number of ships in a convoy changes, the control centre 101 may control the re-positioning of the remaining ships as appropriate for obtaining hydrodynamic advantages.

The control centre 101 also controls the route of the convoy. The control centre 101 may receive substantially real time metrological data and/or substantially real time oceanic data and, in dependence on this and any other information such as the hydrodynamic advantages that may be obtained, the control centre 101 may route the convoy in the most appropriate way. For example, the convoy may be routed in the way that requires the least fuel, the safest way given security considerations, or the way that is quickest.

The communication between the control centre 101 and the controllers 103 within the control system is described in more detail below.

The control centre 101 may communicate with the controllers 103 over a satellite communications link. The communication may be encrypted. Each of the communication links between the control centre 101 and a controller 103 may be a dedicated communications link that provides a predetermined minimum bandwidth. The communications link between the control centre 101 and each controller 103 may allow real-time, or substantially real-time, control of each ship by the control centre 101. The communications link may use a TCP/IP and/or UDP application. An advantage of TCP is that it provides a reliable network connection. UDP is less reliable than TCP but UDP allows faster data transmission than TCP. Both TCP and UDP could be used. For example, TCP could be used for most commands but UDP connections may be used for some of the commands and/or for any of the commands when a low latency over the network is required, such as in emergency scenarios. Commands sent using UDP during emergency scenarios may include, for example, stop engines, full ahead, full reverse, thrusters on/off and immediate disband of convoy.

The communications protocol may be specific for each application. For example, a marine navigational protocol may be used for the application of controlling the movement and positioning of ships in one or more convoys. Ships that want to utilise the advantages of the control system may need to support the protocol, and this may result in ships having to provide data to the control system that aids the control of the convoy. In this way the control centre 101 may obtain data from all of the participating ships in a convoy. The data form all of the ships may be aggregated, together with any knowledge of other convoys that are controlled by the control system, so that the control system can use this data when determining the route for the convoy. The determined route may be optimised according to a number of different criteria. For example, the route may optimise the time, or required fuel, for an individual ship or more than one of the ships.

The system may hide certain types of data that ships send to it from the other ships. This would protect commercially sensitive information so that vessels from multiple owners can travel together in the same convoy.

As described above, the control centre 101 may obtain and utilise data such as oceanic, geographic and metrological data and use this to determine the most appropriate route. Each ship in a convoy may therefore benefit from access to such data without having to directly subscribe to the service itself.

Ships, other than the lead ship, may leave a convoy, and stop being controlled by the control centre 101 at any time. It is expected that a ship will leave its convoy when the ship approaches its final destination. The process of any ship leaving a convoy, and the re-positioning of the remaining ships in the convoy into an appropriate formation, would be controlled by the control centre 101.

A lead ship may leave a convoy if the entire convoy has substantially reached its destination and the convoy is disbanding, or if an arrangement is place for another ship to take over as the lead ship. Both of these processes would be performed under the control of the control centre 101.

The marine navigational protocol according to an embodiment may be run as an application on a server at the control centre 101. The control centre 101 may also have a unique identifier. The control centre 101 may be replicated, possibly in the cloud, to provide redundancy in the event of failure of the control centre 101.

Any ship wanting to make use of the navigational system may do so by running a client application at the controller 103 that supports the protocol. The hardware at the controller 103 comprises a satellite communications system for receiving data from, and sending data to, the control centre 101 and also a computing system for running the client application so that the controller 103 can control the movement of the ship.

Each ship may be uniquely identified via a standard network MAC address and an associated ship name. The controller 103 may be dedicated, and registered to, a specific ship. The controllers 103 on ships are referred to herein as clients or client communications devices. The control centre 101 is referred to herein as a server or a server communications device.

Each client forms an independent connection to the server. This connection topology ensures a robust command and control architecture. Unless there is a failure at the server, the failure of a connection to any one ship should not affect the connections to the other ships. All communications may be encrypted to ensure data security.

Conceptual features of a marine navigational protocol according to an embodiment of the disclosure are described below.

### Server - basic logical states and command set

Features of the protocol may include a basic command set used to establish and control the convoys.

The server may also implement logical state machines to implement the control of the convoys and to answer 'request status' commands which could be used by an overarching management toolset to interrogate and diagnose the server itself e.g. the server may assume 'initialising', 'listening' and 'controlling' states, to identify its overall status - listening being a state where no connections have been created with clients but the system is actively listening for connection requests to be made; controlling state being a state where connections have been established and vessels are under its control.

Individual convoys within the system may additionally have states such as, anchored up, forming, synchronising, closed, and disbanding to represent a convoy at anchor, a convoy being established and put together, a convoy being closed to further requests to join it, a convoy being synchronised with another, and a convoy being closed down or disbanded.

The protocol may require a basic set of commands which can be initiated by the client or server depending on the logical status of the system and of individual convoys / vessels.

A 'basic inquiry' command may be initiated to solicit identifying data from the client by the server. Such data may be stored in the memory of the client, such as the name of a ship, the ship's MAC address, registered home port, etc.

Extended inquiry' commands can be initiated to solicit more detailed data form the client, such as data that is unlikely to change but is at a lower granularity to the basic inquiry command. The extended inquiry commands may be used to obtain, for example, details of the owner of a ship, the ship's gross and nett displacement; the ship's plimsoll line, length and beam; minimum, maximum and preferred speed. The extended inquiry command may carry a page number to identify what data it is requested, i.e. page 1 could be gross / net weight, plimsoll line, page 2 manning and crew requirements, etc.

Configuration sense command - these may be a series of commands used to sense configurable data that is data that regularly changes, for example the destination port, fuel type the amount of remaining fuel etc.

Configuration select command - these may be a series of commands used to write or set the configurable data that is required to service the configuration sense commands.

Messages may be used as a handshake and to convey basic information regarding the status of the data interchange.

### Logical States - establishment of a control centre 101

- The server process may be initiated on the server at the control centre 101. This may set up connections and 'listen' for requests to open a connection to it. Once established, the server may persist indefinitely with the system going into initializing and then listening state.

### Establishment of client connections

- A least one ship, running a client application/process, connects to the server.
- One or more further ships, running independent client applications/processes, also connect to the server.

### Solicit to lead a convoy

This may be an interchange in which a ship negotiates with the control centre 101 to offer itself as a lead vessel in a convoy. In this interchange the ship solicits with the server stating its destination and schedule. The server acknowledges the request and responds with a series of inquiry, model sense commands to assess the capability and suitability of the ship.

Leading ships may assume an economic credit (token) to compensate for the advantage they provide to the convoy as a whole. If the ship's offer is to be accepted by the server it will calculate the economic value and return the proposed token value along with an accepted status.

The ship can confirm or decline the token.

If the ship is not required, or deemed inappropriate, as a lead ship then the server would instead terminate the interchange with a message declining the offer.

### Search Convoys Request

This may be an interchange whereby ships connected to the server service (control centre 101) exchange information with the server to inquire if there are convoys expected in their vicinity which might be joined in order for them to reach their destination.

In this interchange the ship states its destination and schedule and any restrictions that the ship has, for example there may be territorial waters that are considered hostile and are to be avoided. The control centre 101 identifies if a convoy (or convoys) are available, or will be available, to service the request.

Having raised a request with the server the client expects two responses. The first is an immediate acknowledgement message confirming the requested destination and schedule. The interchange transitions to a pending status whilst the server assesses the request.

In the second response the server populates a status field to indicate if a convoy is available, or will be, and an ID field identifying the unique name of the convoy. The convoy IDs are unique alphanumeric combinations.

In order to assess the suitability of a convoy offered to it, the client (ship) may use extended inquiry commands, with the convoy ID as an identifier, to solicit further information about the convoy from the sever. For example, a ship might inquire as to its anticipated arrival date, how many convoys it will travel in, through which territorial waters it will travel and what protection a convoy might have.

In servicing this search the control centre 101 is aware of all global convoys under its control, the server aggregates the data about individual ships, as well as the convoys, to jointly control and synchronise them.

### Join Convoy Request

This may be an interchange initiated following a successful 'search convoys request', whereby a ship has been offered at least one convoy it may join.

Once a ship requests to join a convoy, it is expected to respond to a number of data exchanges initiated by the control centre 101.

The client (ship) is expected to:
- Support a basic inquiry command, issued by the server, to identify itself;
- Support further extended inquiry commands issued by the server, and to which a client (ship) may return its physical properties and capabilities, for example its class (gross and nett displacement), details of its Plimsoll line, length, beam; details of its min, maximum and optimum speed;
- Support further extended inquiry commands identifying the ships manoeuvring capabilities - thrusters etc.
- Support further extended inquiry commands identifying the ships manning requirement / status (manned / unmanned); crew numbers; and
- Support further extended inquiry commands identifying the ships wake characteristics, such as the wake profile vs. the velocity profile.

### Configuration Sense Commands

The protocol may comprise 'configuration sense' commands which are issued by the server to determine the values of configurable data associated with the vessel, for example:
- Average fuel consumption, fuel type and quantity;
- Destination port;
- Scheduled arrival, earliest and latest arrival dates and times;
- Nature and value of the cargo; and
- Owner's details.

The protocol may comprise 'configuration sense' commands which are issued by the client, to the server, to solicit attributes of the convoy - identified by a unique name. The commands may obtain, for example:
- Size of convoy, i.e. the number of vessels;
- Class of vessels in convoy, the number of escorts/protection vessels;
- Outline route, territorial waters crossed etc.;
- Anticipated arrival date and time;
- Number of convoys anticipated to reach final destination;
- Service level agreement data; and
- Quality metrics / ratings.

### Configuration Select Commands

The protocol may comprise 'configuration select' commands which are used by systems belonging to the ship's owner, or by the control centre 101, to configure any, and/or all, data that is required to facilitate model sense requests.

### Manoeuvre and control commands

The protocol may comprise various commands to support the manoeuvring and anchoring of ships, including forward, reverse, port, starboard, thrusters.

### Transition Convoys commands

An individual ship may be part of more than one convoy whilst on route to its final destination. This is possible due the control centre 101 having knowledge of more than one convoy and requires coordination of the convoys to bring them together, followed by synchronisation of their speed before a command to instruct a vessel to peel off of the originating convoy into and join an adjacent convoy. The transition from the originating to the receiving convoy may be fully managed by the control centre 101. The vessel to be transferred may not be required to go through the process of soliciting for a convoy to join, rather it will be deemed to have an implied guarantee of access to the receiving convoy as result of it joining the first convoy at its originating port.

### Disband convoy

The disband convoy command may be use to coordinate the orderly dispersal of ships in the convoy, including the leading vessel.

Accordingly, embodiments provide a control system for controlling a plurality of ships and also a communications protocol that may be used by the control system.

Embodiments provide strategic, logistical and security advantages through global command control, and synchronisation of marine convoys. Advantages include lower fuel requirements, emissions and operating costs of ships through a routing that is dependent on metrological data, oceanic data and the placement of ships in convoys.

Embodiments may be used in the provision of autonomous control of a plurality of ships.

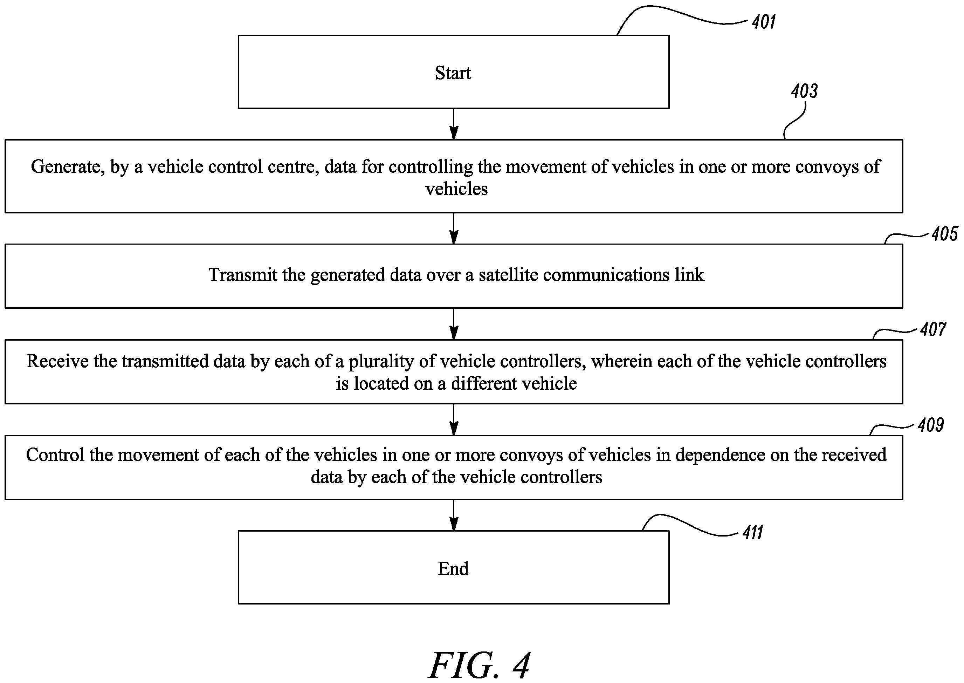

Figure 4 shows a method of controlling the movement of a plurality of vehicles in one or more convoys of vehicles according to an embodiment.

In step 401, the method begins.

In step 403 a vehicle control centre 101 generates data for controlling the movement of vehicles in one or more convoys of vehicles.

In step 405 the generated data is transmitted over a satellite communications link.

In step 407 the transmitted data is received by each of a plurality of vehicle controllers 103, wherein each of the vehicle controllers 103 is located on a different vehicle.

In step 409 the movement of each of the vehicles in one or more convoys of vehicles is controlled in dependence on the received data by each of the vehicle controllers 103.

In step 411 the method ends.

Embodiments include a number of modifications and variations to the techniques as described above.

In particular, embodiments are described above for the application of controlling the movement of ships in convoys of ships. Embodiments also include other applications for controlling the movement of vehicles in convoys. For example, embodiments include the vehicles being airborne vehicles, such as aircraft, drones and/or missiles.

It will be understood that the disclosure is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A vehicle controller (103) that is located on a vehicle, the vehicle controller (103) comprising:
a client communications device for communicating, over a satellite link, with a server communications device in a vehicle control centre (101) that is remote from the vehicle controller (103); and
a vehicle control device arranged to control the movement of the vehicle in response to data received by the client communications device over the satellite link, such that the movement of the vehicle in one or more convoys of vehicles is dependent on received data by the client communications device.

2. A vehicle control centre (101) for controlling a plurality of vehicles, the vehicle control centre (101) comprising:
a computing system for generating data for controlling the movement of each of a plurality of vehicles, wherein the vehicles are all remote from the control centre (101) and, in use, the generated data controls the movement of the vehicles in one or more convoys of vehicles; and
a server communications device for communicating, over a satellite link, with a plurality of client communications devices, wherein each client communications device is comprised by a vehicle controller (103) located on one of the plurality of vehicles;
wherein, in use, data for controlling the movement of the vehicles in one or more convoys of vehicles is communicated from the control centre (101) to the vehicles.

3. The vehicle control centre (101) according to Claim 4, wherein the control centre (101) is land based.

4. A vehicle control system for controlling a plurality of vehicles, the vehicle control system comprising:
a plurality of vehicle controllers (103) according to Claim 1, wherein each vehicle controller (103) is located on a different vehicle; and
a vehicle control centre (101) according to Claim 2 or Claim 3, arranged to generate and communicate, over the satellite link, data for controlling the movement of the vehicles in one or more convoys of vehicles.

5. The vehicle control system according to Claim 4, wherein the plurality of vehicles are comprised by a plurality of separate convoys of vehicles; and the vehicle control centre (101) is arranged to control the movement of at least one convoy in dependence on the location and/or movement of one or more other convoys.

6. The vehicle control system according to Claim 5, wherein the vehicle control centre (101) is arranged to control the number of vehicles in each convoy by controlling one or more vehicles to join at least one convoy and/or controlling one or more vehicles to leave at least one convoy.

7. The vehicle control system according to Claim 5 or Claim 6, wherein the vehicles are arranged in a plurality of convoys; and
the vehicle control centre (101) is arranged to control the movement of one or more vehicles from one convoy to one or more other convoys.

8. The vehicle control system according to any one of Claims 5 to 7, wherein the vehicle control centre (101) is arranged to control the relative positions of the vehicles within each convoy given the wake generated by at least one of the vehicles in the convoy.

9. The vehicle control system according to Claim 8, wherein the vehicle control centre (101) is arranged to control the relative positions of the vehicles within each convoy such that the vehicles are in a Vee formation or a Diamond formation.

10. The vehicle control system according to Claim 8 or Claim 9, wherein the vehicle control centre (101) is arranged to control the relative positions of the vehicles within each convoy in dependence on:
a prediction of the wake of at least one of the vehicles in the convoy; and/or
one or more images of the convoy, such as satellite images.

11. The vehicle control system according to any one of Claims 4 to 11, wherein the vehicle control centre (101) is arranged to control the movement of each vehicle in dependence on metrological and/or oceanic data.

12. The vehicle control system according to any one of Claims 4 to 11, wherein the vehicle control centre (101) is arranged to determine a route for each vehicle to an intended destination of each vehicle in dependence on the location and movement of one or more other vehicles and/or one or more convoys of vehicles.

13. The vehicle control system according to any one of Claims 4 to 12, wherein the vehicle control centre (101) is arranged to send the generated data for controlling each vehicle to each vehicle such that each vehicle is controlled substantially in real time.

14. A method of controlling the movement of a plurality of vehicles in one or more convoys of vehicles, the method comprising:
generating, by a vehicle control centre (101), data for controlling the movement of vehicles in one or more convoys of vehicles;
transmitting the generated data over a satellite communications link;
receiving the transmitted data by each of a plurality of vehicle controllers (103), wherein each of the vehicle controllers (103) is located on a different vehicle; and
controlling the movement of each of the vehicles in one or more convoys of vehicles in dependence on the received data by each of the vehicle controllers (103).

15. The method according to Claim 14, wherein the method is performed in a vehicle control system according to any one of Claims 4 to 13.
